# EUROPÄISCHE PATENTANMELDUNG

(11) **EP 0 967 776 A2**
(43) Veröffentlichungstag der Anmeldung: **29.12.1999**
(21) Anmeldenummer: 99440148.7
(22) Anmeldetag: 18.06.1999
(51) Int. Cl.: H04M 3/42, H04M 7/00, H04Q 3/00

(54) **Verbindungsaufbauverfahren Dienststeuereinheit und Kommunikationsnetz**

(30) Priorität: 23.06.1998 DE 19827956
(71) Anmelder: ALCATEL, 75008 Paris (FR)
(72) Erfinder: Lautenschlager, Wolfgang, 71287 Weissach-Flacht (DE); Stahl, Uwe, 71229 Leonberg (DE)
(74) Vertreter: Zinsinger, Norbert

(57) **Zusammenfassung**

Die Erfindung betrifft ein Verfahren zum Aufbau einer Telekommunikationsverbindung von einem rufenden Teilnehmer (A) zu einem gerufenen Teilnehmer (B), der einem Nummerierungsbereich (AREA2) zugeordnet ist, den sich zwei oder mehr Teilnehmeranschlußnetze (KN2, KN3, KN4) verschiedener Netzbetreiber (OP2, OP3, OP4) teilen sowie ein Kommunikationsnetz (KN6) und eine Dienststeuereinheit (SCP) zur Durchführung des Verfahrens. Eine Verbindungsanforderung (CR) vom Teilnehmeranschlußnetz (OP2) des rufenden Teilnehmers wird zu dem Kommunikationsnetz (KN6) geleitet, das einem Fernnetzbetreiber (OP6) zugeordnet ist, und die Verbindung zwischen dem rufenden Teilnehmer (A) und dem gerufenen Teilnehmer (B) wird über dieses Kommunikationsnetz (KN6) aufgebaut. Die Ankunft der Verbindungsanforderung (CR) im Kommunikationsnetz (KN6) des Fernetzbetreibers (OP6) triggert einen IN Dienst. Der IN Dienst führt für die Verbindungsanforderung (CR) sowohl eine Zugangsüberwachungsfunktion, die den Zugang in das Kommunikationsnetz (KN6) des Fernetzbetreibers (OP6) überwacht, als auch eine Rufnummernportabilitätsfunktion durch, die das Teilnehmeranschlußnetz (KN3) des gerufenen Teilnehmers (B) ermittelt.

## Beschreibung

Die Erfindung betrifft ein Verfahren zum Aufbau einer Telekommunikationsverbindung von einem rufenden Teilnehmer zu einem gerufenen Teilnehmer nach dem Oberbegriff von Anspruch 1, eine Dienststeuereinheit nach dem Oberbegriff von Anspruch 9 und ein Kommunikationsnetz eines Fernnetzbetreibers nach dem Oberbegriff von Anspruch 10.

Bei üblichen Verbindungsaufbauverfahren wird eine Verbindungsanforderung mittels einer in ihr eingetragenen Rufnummer des gerufenen Teilnehmers zum Teilnehmeranschluß des gerufenen Teilnehmers geleitet. Die Rufnummer gibt den Weg durch das Kommunikationsnetz vor und wird während des Weges Schritt für Schritt ausgewertet, d. h. sie adressiert zuerst den Ortsnetzbereich und die Teilnehmervermittungsstelle und sodann den Teilnehmeranschluß des gerufenen Teilnehmers innerhalb des Nummerierungsbereichs der Teilnehmervermittlungsstelle.

Die Erfindung geht nun von einem Verbindungsaufbau in einer deregulierten Netzumgebung aus, in der sich mehrere Teilnehmeranschlußnetze verschiedener Netzbetreiber einen Nummerierungsbereich, beispielsweise einen Ortsnetzbereich, teilen, und Rufnummernportabilität zwischen den Teilnehmeranschlußnetzen dieser Netzbetreiber besteht. Rufnummernportabilität bedeutet, das eine frei Zuordnung von Rufnummern des Nummerierungsbereiches zu Teilnehmeranschlußnetzbetreibern besteht und somit das Teilnehmeranschlußnetz des gerufenen Teilnehmers nicht durch eine spezielle Kennung innerhalb der Rufnummer erkennbar ist. Ein solches Verbindungsaufbauverfahren wird beispielsweise in dem Bericht "High level service description for number portability" der "Public Network Operators - Interest Group", 29 Juni 1994 beschrieben.

Rufnummernportabilität wird durch Umwerten der Rufnummer mittels Anrufweiterschaltung oder mittels eines IN-Dienstes (IN = Intelligent Network) realisiert. Wechselt ein Teilnehmer innerhalb eines Ortsnetzbereiches von einem ersten Netzbetreiber zu einem zweiten Netzbetreiber und will seine Rufnummer mitnehmen, so wird eine solche Anrufweiterleitung im Teilnehmeranschlußnetz des ersten Netzbetreibers installiert. Wird eine Verbindungsanforderung mit dieser Rufnummer von einem Dienst des Teilnehmeranschlußnetzes des ersten Netzbetreibers erkannt, so wird die Verbindungsanforderung in das Teilnehmeranschlußnetz des zweiten Netzbetreibers umgeleitet. Diese Umleitung wird dadurch realisiert, daß anstelle der ursprünglichen Rufnummer eine neue Rufnummer in die Verbindungsanforderung eingetragen wird, die den gerufenen Teilnehmer gemäß eines zweiten, speziell für diesen Fall geschaffenen, Adressierungsschemas adressiert.

Dieses Verbindungsaufbauverfahren bringt den Nachteil mit sich, daß eine Vielzahl von Diensten zu installieren und deren Datenbestand zu synchronisieren ist.

Der Erfindung liegt nun die Aufgabe zugrunde, den Verbindungsaufbau in einer deregulierten Netzumgebung mit Kommunikationsnetzen verschiedener Fern netz- und Teilnehmeranschlußnetzbetreiber mit möglichst geringem technischen Aufwand durchzuführen.

Diese Aufgabe wird gelöst durch ein Verfahren zum Aufbau einer Telekommunikationsverbindung von einem rufenden Teilnehmer zu einem gerufenen Teilnehmer nach der Lehre von Anspruch 1, eine Dienststeuereinheit nach der Lehre von Anspruch 9 und ein Kommunikationsnetz eines Fernnetzbetreibers nach der Lehre von Anspruch 10.

Der Erfindung liegt hierbei der Gedanke zugrunde, die Zugangsüberwachungsfunktion für den Zugang in das Kommunikationsnetz eines Fernnetzbetreiber und die Rufnummernportabilitätsfunktion zur Ermittlung des Teilnehmeranschlußnetzes des gerufenen Teilnehmers innerhalb eines IN-Dienstes zu kombinieren. Dieser neuartige Dienst wird hierbei bei der Ankunft einer Verbindungsanforderung im Kommunikationsnetze des Fernetzbetreibers getriggert.

Dadurch ergibt sich der Vorteil, daß die Anzahl der Dienste, die für einen Verbindungsaufbau in der deregulierten Netzumgebung zu erbringen sind, im Durchschnitt reduziert wird. Die Verbindungsaufbauzeit wird verkürzt und die benötigte IN Datenverarbeitungskapazität wird reduziert (IN = Intelligent Network). Weiter wird die Anzahl der Datenbanken und die Anzahl der Daten, die insgesamt gespeichert und synchronisiert werden müssen, deutlich reduziert.

Ein weiterer Vorteil der Erfindung besteht darin, daß die Erfindung mit geringem Aufwand in die bestehende Netzarchitektur integriert werden kann.

Vorteilhafte Ausgestaltungen der Erfindung sind den Unteransprüchen zu entnehmen.

Es ist hierbei vor allem vorteilhaft, eine gemeinsame Datenbank für die Durchführung der Zugangsüberwachungsfunktion und der Rufnummernportabilitätsfunktion vorzusehen. Die von beiden Funktionen benötigten Daten lassen sich so strukturieren, daß die Anzahl der gespeicherten Daten im Vergleich zu zwei getrennten Datenbanken erheblich reduziert wird.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationssystem mit mehreren Kommunikationsnetzen verschiedener Netzbetreiber und mit einem erfindungsgemäßen Kommunikationsnetz.
- Fig. 2: zeigt eine funktionelle Darstellung eines Ausschnittes aus dem erfindungsgemäßen Kommunikationsnetz nach Fig. 1.

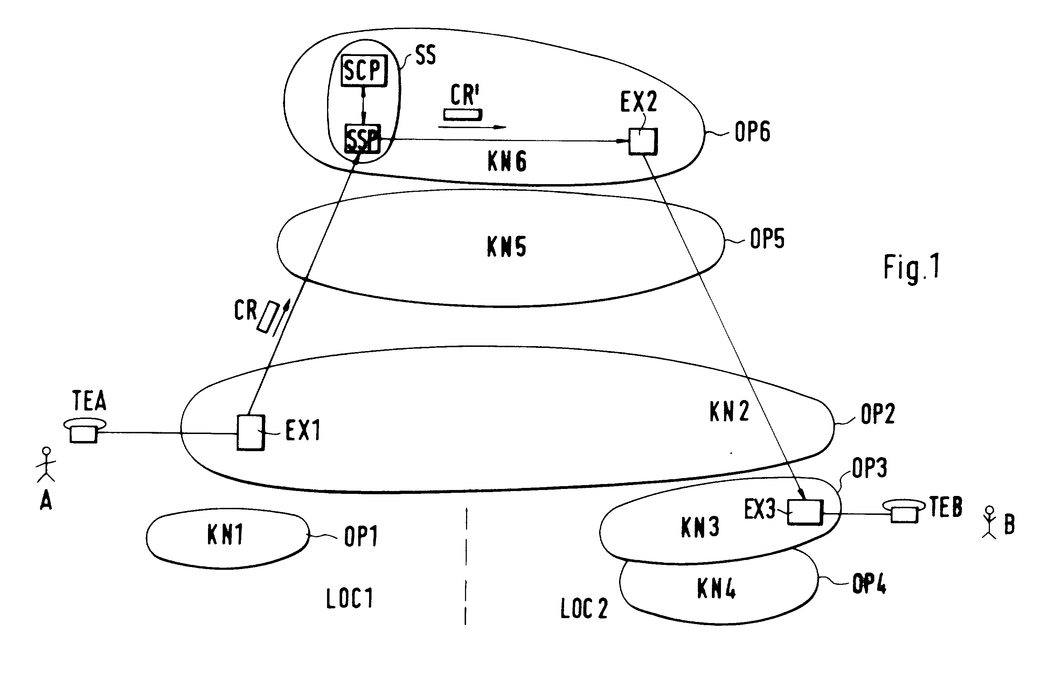

Fig. 1 zeigt ein Kommunikationssystem mit mehreren Kommunikationsnetzen KN1 bis KN6, die jeweils einem Netzbetreiber OP1, OP2, OP3, OP4, OP5 bzw. OP6 zugeordnet sind und zwei Endgeräte TEA und TEB, die jeweils einem Teilnehmer A bzw. B zugeordnet sind. Von den Vermittlungsstellen der Kommunikationsnetze KN1 bis KN6 sind beispielhaft vier Vermittlungstellen EX1 bis EX3 und SSP gezeigt.

Bei den Kommunikationsnetzen KN1, KN3 und KN4 handelt es sich um Teilnehmeranschlußnetzen von lokalen Teilnehmeranschlußnetzbetreibern. Das Kommunikationsnetz KN1 bedeckt hierbei einen geographischen Bereich AREA1 und die Kommunikationsnetze KN3 und KN4 einen geographischen Bereich AREA2. Bei solchen Teilnehmeranschlußnetzen handelt es sich um übliche Anschlußnetze für den Anschluß von Fernsprechendgeräten und Nebenstellenanlagen. Mögliche Fernsprechendgeräte sind hierbei Telefon, Faxgeräte oder Modems und Schnittstellenkarten für den Anschluß von Datenverarbeitungsanlagen. Es kann sich hierbei um ISDN-Endgeräte (ISDN = Integrated Services Digital Network) oder um analoge Endgräte handeln. Die Endgräte können auch über eine Funkschnittstelle, beispielsweise nach dem DECT Standard (DECT = Digital European Cordless Telecommunication) mit solch einem Teilnehmeranschlußnetz verbunden sein. Bei den Endgeräten TEA und TEB handelt es sich um solche Endgeräte.

Die Teilnehmeranschlußnetze KN 1, KN3 und KN4 werden jeweils von ein oder mehreren miteinander verbundenen Teilnehmeranschlußvermittlungsstellen gebildet. Bei größerer Verkehrsbelastung können diese Teilnehmeranschlußnetze weiter ein oder mehrere Transitvermittlungsstellen enthalten.

Bei den Kommunikationsnetzen KN5 und KN6 handelt es sich um Fern netze der Fernnetzbetreiber OP5 bzw. OP6. Solche Fern netze dienen dem Aufbau von Verbindung zwischen Teilnehmeranschlußnetzen und werden so von ein oder mehreren miteinander verbunden Transitvermittlungsstellen gebildet.

Es ist auch möglich, daß die Fernnetzbetreiber OP5 und OP6 in einigen oder in mehreren geographischen Bereichen auch über Teilnehmeranschlußnetze verfügen und dort ebenfalls die Rolle von Teilnehmeranschlußnetzbetreibern einnehmen. Das von Ihnen betriebene Telekommunikationsnetz würde somit sowohl ein Fern netz als auch ein oder mehrere Teilnehmeranschlußnetze umfassen.

Das Kommunikationsnetz KN2 stellt solch ein Kommunikationsnetz dar, das sowohl Teilnehmeranschlußnetze als auch ein Fern netz umfaßt. Es verfügt in diesem Ausführungsbeispiel über Teilnehmeranschlußnetz in den geographischen Bereichen AREA1 und AREA2. Das Kommunikationsnetz KN2 stellt damit das Kommunikationsnetz eines großen Netzbetreibers dar, beispielsweise das eines ehemaligen Monopolisten.

Im geographischen Bereich AREA1 kann ein Teilnehmer somit zwischen zwei Teilnehmeranschlußnetzbetreibern, den Betreibern OP1 und OP2, wählen. Im geographischen Bereich AREA2 kann ein Teilnehmer zwischen drei Teilnehmeranschlußnetzbetreibern, den Betreibern OP2, OP3 und OP4, wählen. Die Kommunikationsnetze der Netzbetreiber OP1 und OP2 teilen sich den Nummerierungsbereich des geographischen Bereichs AREA1 und die Kommunikationsnetze der Netzbetreiber OP2 bis OP4 teilen sich den Nummerierungsbereich des geographischen Bereichs AREA2. Weiter hat ein Teilnehmer die Wahl zwischen drei Fernnetzbetreibern, den Betreibern OP2, OP5 und OP6. Der Teilnehmer A ist ein Teilnehmer des Netzbetreibers OP2, der Teilnehmer B ein Teilnehmer des Netzbetreibers OP3.

Der Aufbau der Kommunikationsnetze KN5 und KN6 wird nun beispielhaft anhand des Aufbaus des Kommunikationsnetzes KN6 erläutert. Auch das Kommunikationsnetz KN2 kann hierbei wie das Kommunikationsnetz KN6 aufgebaut sein.

Das Kommunikationsnetz KN6 weist eine Dienststeuereinheit SCP und ein oder mehrere Dienstvermittlungsstellen auf, von denen in Fig. 1 die Vermittlungsstelle SSP gezeigt ist. Diese Dienstvermittlungsstellen stellen besonders ausgestaltete Vermittlungsstellen dar, die jeweils über eine Dienstvermittlungseinheit verfügen, die eine Dienstvermittlungsfunktion gemäß der IN-Architektur durchführt. Empfängt eine solche Vermittlungsstelle eine spezielle Verbindungsanforderung, so sendet sie eine Dienstanforderungsnachricht an die Dienststeuereinheit SCP, die sodann eine dem angeforderten IN Dienst zugeordnete Dienstlogik ausführt, die die Erbringung des IN Dienstes steuert. Die Dienststeuereinheit SCP und die ein oder mehreren Dienstvermittlungsstellen, hier die Dienstvermittlungsstelle SSP, bilden zusammen eine Diensteinheit SS, die diesen IN-Dienst erbringt. Die Dienststeuereinheit SCP kann physikalisch aus einem abgesetzten Server-Rechner bestehen, sie kann aber auch von einem in die Steuerung einer Dienstvermittlungsstelle integrierten Programm gebildet werden.

Der Teilnehmer A initiiert den Aufbau einer Telekommunikationsverbindung zum Teilnehmer B, indem er eine Verbindungsanforderung mit der Rufnummer des Teilnehmers B als Zielrufnummer mittels seines Endgerätes TEA an die Teilnehmervermittlungsstelle EX1 sendet, die mit seinem Endgerät TEA verbunden ist. In dieser Verbindungsanforderung ist weiter vermerkt, welcher Fernnetzbetreiber für den Verbindungsaufbau zu wählen ist. Dies wird dadurch realisiert, daß eine entsprechende Fernnetzbetreiberkennung der Verbindungsanforderung hinzugefügt wird, beispielsweise indem diese Betreiberkennung vor der Rufnummer des Teilnehmers B gewählt wird. Durch Wahl des Fernetzbetreibers ist es dem Teilnehmer A möglich, eine möglichst kostengünstige Telekommunikationsverbindung aufzubauen. Die Wahl des Fernnetzbetreibers kann hierbei auch automatisch durch das Endgerät TEA oder durch einen Dienst der Vermittlungsstelle EX1 erfolgen. Weiter ist es möglich, daß vom Teilnehmer B bereits im Voraus ein Fernnetzbetreiber für alle zukünftigen Verbindungen festgelegt wird.

Aufgrund der Fernnetzbetreiberkennung wird eine Verbindungsanforderung CR von der Vermittlungsstelle EX1 des Kommunikationsnetzes KN2 an das Kommunikationsnetz KN6 des Fernnetzbetreibers OP6 geleitet. Diese Verbindungsanforderung CR wird im Kommunikationsnetz KN6 zur Vermittlungsstelle SSP geleitet. Die Vermittlungsstelle SSP erkennt, daß die Verbindungsanforderung CR von einer Vermittlungsstelle eines anderen Netzbetreibers stammt und triggert durch Senden einer Dienstanforderungsnachricht an die Dienststeuereinheit SCP die Ausführung eines IN Dienstes. Der IN Dienst wird somit bei Ankunft einer Verbindungsanforderung im Kommunikationsnetz KN6 des Fernnetzbetreibers OP6 getriggert, die aus dem Kommunikationsnetz eines anderen Netzbetreibers stammt. Die Vermittlungsstelle SSP ist somit vorteilhafterweise eine Netzübergangsvermittlungstelle, über die das Kommunikationsnetz KN6 mit dem Kommunikationsnetz OP2 verbunden ist. Damit ist die Information, daß eine Verbindungsanforderung im Kommunikationsnetz KN6 ankommt, automatisch verfügbar.

Der IN Dienst führt nun für die Verbindungsanforderung CR in einer IN Sitzung zwei Funktionen durch: Zum einen eine Zugangsüberwachungsfunktion, die den Zugang von Verbindungsanforderung in das Kommunikationsnetz KN6 des Netzbetreibers OP6 überwacht, und zum anderen eine Rufnummernportabilitätsfunktion, die das Teilnehmeranschlußnetz des gerufenen Teilnehmers B ermittelt. Ist der Teilnehmer A berechtigt, eine Verbindung durch das Kommunikationsnetz KN6 aufzubauen, so wird von dem IN Dienst eine Verbindungsanforderung CR', in der das Teilnehmeranschlußnetz KN3 des Teilnehmers B adressiert ist, weiter in Richtung zum Endgerät TEB des Teilnehmers B geleitet.

Die Verbindungsanforderung CR' wird gemäß der in ihr enthaltenen Information zur Vermittlungsstelle EX2 geleitet, die eine Netzübergangsvermittlungstelle zum Kommunikationsnetz KN2 darstellt. Von dort wird die Verbindungsanforderung CR' ins Kommunikationsnetz KN2 geleitet und gelangt schließlich zur Vermittlungsstelle EX3, die die Teilnehmeranschlußvermittlungstelle des Teilnehmers B darstellt. Anschließend oder parallel wird die Telekommunikationsverbindung gemäß dem von der Verbindungsanforderung zurückgelegten Weg durch die Kommunikationsnetze KN2, KN6 und KN3 aufgebaut.

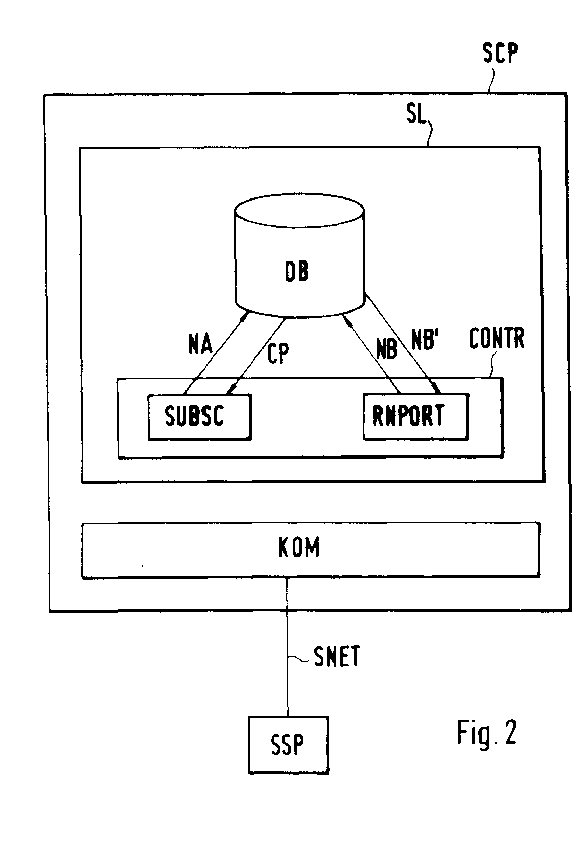

Anhand von Fig. 2 wird nun der genaue Aufbau der Dienststeuereinheit SCP verdeutlicht.

Fig. 2 zeigt die Dienststeuereinheit SCP und die Vermittlungsstelle SSP, die miteinander über ein Signalisierungsnetz SNET verbunden sind.

Die Dienststeuereinheit SCP wird von einem oder von mehreren miteinander verbundenen Rechnern gebildet, die gemeinsam mit einer Betriebsystemplattform eine Systemplattform für darauf aufsetzende Andwendungsprogramme bilden. Aus funktioneller Sicht weist die Dienststeuereinheit SCP eine Kommunikationseinheit KOM und eine Dienstelogik SL auf.

Es ist möglich, daß die Dienststeuereinheit SCP noch über weitere Dienstelogika verfügt. Die Dienstelogik SL würde hierbei diejenigen Dienstelogik darstellen, die, wie oben beschrieben, bei der Ankunft der Verbindungsanforderung im Kommunikationsnetz KN6 des Netzbetreibers OP6 durch die Vermittlungsstelle SSP getriggert wird.

Die Kommunikationseinheit KOM führt die hard- und softwaremäßigen Funktionen zur Bereitstellung der Kommunikation mit der Dienstvermittlungseinheit der Vermittlungsstelle SSP und mit den Dienstvermittlungseinheiten der weiteren Dienstvermittlungsstellen des Kommunikationsnetzes KN6 bereit. Sie bearbeitet die Nr. 7 Transportprotokolle zur Kommunikation über das Signalisierungsnetz SNET und die höheren Protokollschichten gemäß der IN Architektur (TCAP Protokoll, INAP Protokoll).

Die Dienstelogik SL steuert bei seiner Ausführung die Erbringung des IN Dienstes. Sie weist eine Steuereinheit CONTR mit den Funktionen SUBSC und RNPORT und eine Datenbank DB auf, auf die diese Funktionen zugreifen.

Es ist auch möglich, daß die Datenbank DB nicht Teil der Dienststeuereinheit SCP ist und mit der Dienststeuereinheit SCP über ein Kommunikationsnetz verbunden ist, über das die Steuereinheit CONTR auf sie zugreift.

Die Steuereinheit CONTR wird durch die Dienstanforderungsnachricht von der Dienstvermittlungseinheit aktiviert und führt sodann die Funktionen SUBSC und RNPORT innerhalb einer IN Dienstsitzung durch.

Die Funktion SUBSC ist eine Zugangsüberwachungsfunktion. Sie überwacht, ob von außerhalb des Kommunikationsnetze KN6 Verbindungsanforderung an das Kommunikationsnetz KN6 gesendet werden und bestimmt sodann wie weiter mit diesen Verbindungsanforderungen zu verfahren ist. Es wird so überwacht, ob der Teilnehmer, von dem diese Verbindungsanforderung stammt, bereits einen Vertrag mit dem Netzbetreiber OP6 hat. Ist dies der Fall, so wird der Verbindungsaufbau fortgesetzt. Ist dies nicht der Fall, so wird der rufende Teilnehmer mit einem Operator verbunden. In der Datenbank DB sind hierzu Teilnehmer ein oder mehrere Kundenparameter zugeordnet. Kundenparameter geben beispielsweise an, ob der zugeordnete Teilnehmer bereits Kunde des Betreibers OP6 ist, für welche Telekommunikationsdienste ein Vertrag besteht oder welche Tarife der Kunde gewählt hat. Die Steuereinheit CONTR sendet zur Ermittlung der Kundenparameter die in der Verbindungsanforderung angegebene Rufnummer NA des rufenden Teilnehmers A an die Datenbank DB und erhält als Antwort die dieser Rufnummer zugeordneten Kundenparameter CP zurück.

Es ist auch möglich, daß die Zugangsüberwachungsfunktion SUBSC weitere Funktionen ausführt, beispielsweise den Verbindungsaufbau mitprotokolliert oder die Vergebührung des Verbindungsaufbaus mit beeinflußt oder steuert. Es ist weiter möglich, daß von der Zugangsüberwachungsfunktion SUBSC lediglich eine Protokollierung des Verbindungsaufbaus beispielsweise für die Gebührennachbearbeitung durchgeführt wird.

Die Funktion RNPORT ist eine Rufnummernportabilitätsfunktion. Sie ermittelt mittels Zugriff auf die Datenbank DB aus der Rufnummer des gerufenen Teilnehmers das Teilnehmeranschlußnetz, über das dieser Teilnehmer angeschlossen ist und steuert die Weiterleitung der Verbindungsanforderung zu diesem Teilnehmeranschlußnetz, beispielsweise indem er die in der Verbindungsanforderung eingetragene Rufnummer des gerufenen Teilnehmers ergänzt oder ersetzt.

Eine Möglichkeit zur Ermittlung des Ziel-Teilnehmeranschlußnetzes besteht darin, daß in der Datenbank DB Teilnehmern Teilnehmeranschlußnetze zugeordnet sind. Ein Teilnehmeranschlußnetz kann beispielsweise durch eine Netzkennung oder durch eine Netzbetreiberkennung adressiert sein. Die Steuereinheit CONTR sendet die in der Verbindungsanforderung eingetragene Rufnummer NB des gerufenen Teilnehmers an die Datenbank DB, die die dieser Rufnummer NB zugeordnete Netzkennung oder Betreiberkennung bestimmt und an die Steuereinheit CONTR zurücksendet. Die Steuereinheit CONTR fügt diese Kennung der Rufnummer des gerufenen Teilnehmers hinzu oder trägt sie an eine vorbestimmte Stelle innerhalb der Verbindungsanforderung ein.

Eine weitere Möglichkeit zur Ermittlung des Ziel-Teilnehmeranschlußnetzes besteht darin, daß in der Datenbank DB Rufnummern portierte Rufnummern zugeordnet sind. Die Steuereinheit CONTR sendet die in der Verbindungsanforderung eingetragene Rufnummer NB des gerufenen Teilnehmers an die Datenbank DB, die ihr sodann im Fall einer Portierung eine portierte Rufnummer NB' zurücksendet. Portierung bedeutet, daß im internen Rufnummernschema innerhalb eines Nummerierungsbereiches Teilnummerierungsbereiche fest bestimmten Teilnehmeranschlußnetzen zugeordnet sind und bei einer Rufnummer, die diesem Schema nicht entspricht die externe Rufnummer auf eine interne, portierte Rufnummer übersetzt wird. Die Steuereinheit CONTR ersetzt sodann innerhalb der Verbindungsanforderung die Rufnummer des gerufenen Teilnehmers durch diese portierte Rufnummer NB'.

Auch andere Methoden der Rufnummernportabilitätsbereitstellung, beispielsweise die Bereitstellung eines internen Rufnummernschemas, können von der Funktion RNPORT unterstützt werden.

Die Datenbank DB enthält eine Datenstruktur, auf die sowohl bei Anfragen von der Funktion SUBSC als auch von der Funktion RNPORT zugegriffen wird. Diese Datenstruktur ordnet Rufnummern sowohl Kundenparameter als auch Betreiberkennungen, Netzkennungen oder portierte Rufnummern zu. Es ist natürlich auch möglich, daß anstelle der Rufnummer ein anderer Parameter zur Identifizierung eines Teilnehmers verwenden wird, beispielsweise dessen Namen oder dessen Kundenkennung.

Es ist auch möglich, daß die Funktionen SUBSC und RNPORT auf getrennte Datenbanken mit unterschiedlichen Datenstrukturen zugreifen, beispielsweise eine erste Datenbank, die Rufnummern Kundenparameter zuordnet und eine zweite Datenbank, die Rufnummern portierte Rufnummern zuordnet.

## Patentansprüche

1. Verfahren zum Aufbau einer Telekommunikationsverbindung von einem rufenden Teilnehmer (A) zu einem gerufenen Teilnehmer (B), der einem Nummerierungsbereich (AREA2) zugeordnet ist, den sich zwei oder mehr Teilnehmeranschlußnetze (KN2, KN3, KN4) verschiedener Netzbetreiber (OP2, OP3, OP4) teilen, wobei bei dem Verfahren eine Verbindungsanforderung (CR) vom Teilnehmeranschlußnetz (OP2) des rufenden Teilnehmers zum Kommunikationsnetz (KN6) eines Fernnetzbetreibers (OP6) geleitet wird und die Verbindung zwischen dem rufenden Teilnehmer (A) und dem gerufenen Teilnehmer (B) über dieses Kommunikationsnetz (KN6) aufgebaut wird,
**dadurch gekennzeichnet,** daß die Ankunft der Verbindungsanforderung (CR) im Kommunikationsnetz (KN6) des Fernnetzbetreibers (OP6) einen IN Dienst triggert und daß der IN Dienst für die Verbindungsanforderung (CR) sowohl eine Zugangsüberwachungsfunktion (SUBSC), die den Zugang in das Kommunikationsnetz (KN6) des Fernetzbetreibers (OP6) überwacht, als auch eine Rufnummernportabilitätsfunktion (RNPORT) durchführt, die das Teilnehmeranschlußnetz (KN3) des gerufenen Teilnehmers (B) ermittelt.

2. Verfahren nach Anspruch 1, dadurch gekennzeichnet, daß der IN-Dienst für die Durchführung der Zugangsüberwachungsfunktion (SUBSC) und der Rufnummernportabilitätsfunktion (RNPORT) auf dieselbe Datenbank (DB) zugreift.

3. Verfahren nach Anspruch 2, dadurch gekennzeichnet, daß die Datenbank Teilnehmern jeweils mindestens einen Kundenparameter, der die Stellung des Teilnehmers als Kunde des Fernnetzbetreibers beschreibt, und eine Teilnehmeranschlußnetz-Kennung zuordnet.

4. Verfahren nach Anspruch 2, dadurch gekennzeichnet, daß die Datenbank (DB) Rufnummern (NA, NB) von Teilnehmern jeweils mindestens einen Kundenparameter (CP), der die Stellung des der Rufnummer zugeordneten Teilnehmers als Kunde des Fernnetzbetreibers beschreibt, und eine portierte Rufnummer (NB') zuordnet.

5. Verfahren nach Anspruch 1, dadurch gekennzeichnet, daß der IN Dienst bei der Durchführung der Zugangsüberwachungsfunktion (SUBSC) mittels der in der Verbindungsanforderung eingetragenen Rufnummer (NA) des rufenden Teilnehmers (A) überprüft, ob der rufende Teilnehmer Kunde des Fernnetzbetreibers (OP6) ist oder nicht.

6. Verfahren nach Anspruch 1, dadurch gekennzeichnet, daß der IN Dienst bei der Durchführung der Rufnummernportabilitätsfunktion eine Kennung für das Teilnehmeranschlußnetz des gerufenen Teilnehmers zur Rufnummer des gerufenen Teilnehmers hinzufügt und in die Verbindungsanforderung einträgt.

7. Verfahren nach Anspruch 6, dadurch gekennzeichnet, daß die Kennung für das Teilnehmeranschlußnetz den Netzbetreiber des Teilnehmeranschlußnetzes bezeichnet.

8. Verfahren nach Anspruch 1, dadurch gekennzeichnet, daß der IN Dienst bei der Durchführung der Rufnummernportabilitätsfunktion (RNPORT) die Rufnummer (NB) des gerufenen Teilnehmers (B) in dessen portierte Rufnummer (NB') übersetzt und die portierte Rufnummer (NB') in die Verbindungsanforderung einträgt.

9. Dienststeuereinheit (SCP) mit einer Kommunikationseinheit (KOM) zur Kommunikation mit ein oder mehreren Dienstvermittlungseinheiten eines Kommunikationsnetzes (KN6) eines Fernetzbetreibers (OP6) und mit einer Dienstelogik (SL) zur Durchführung eines IN-Dienstes,
**dadurch gekennzeichnet,** daß die Dienstelogik (SL) so ausgestaltet ist, daß sie, getriggert durch die Ankunft einer Verbindungsanforderung (CR) im Kommunikationsnetz (KN6) des Fernetzbetreibers (OP6) für die Verbindungsanforderung (CR) sowohl eine Zugangsüberwachungsfunktion (SUBSC), die den Zugang in das Kommunikationsnetz des Fernetzbetreibers überwacht, als auch eine Rufnummernportabilitätsfunktion (RNPORT) durchführt, die das Teilnehmeranschlußnetz (KN3) eines in der Verbindungsanforderung (CR) bezeichneten gerufenen Teilnehmers (B) ermittelt.

10. Kommunikationsnetz (KN6) eines Fernnetzbetreibers (OP6) zum Aufbau von Telekommunikationsverbindungen zwischen rufenden Teilnehmern (A) und gerufenen Teilnehmern (B), die einem Nummerierungsbereich (AREA2) zugeordnet sind, den sich zwei oder mehr Teilnehmeranschlußnetze (KN2, KN3, KN4) verschiedener Netzbetreiber (OP2, OP3, OP4) teilen, **dadurch gekennzeichnet**, daß das Kommunikationsnetz (KN6) mit einer Diensteinheit (SS) versehen ist, die so ausgestaltet ist, daß die Ankunft einer Verbindungsanforderung (CR) zur Anforderung des Aufbaus einer Verbindung zwischen einem rufenden Teilnehmer (A) und einem gerufenen Teilnehmer (B) im Kommunikationsnetz (KN6) des Fernetzbetreibers (OP6) einen IN Dienst triggert und daß der IN Dienst für die Verbindungsanforderung (CR) sowohl eine Zugangsüberwachungsfunktion (SUBSC), die den Zugang in das Kommunikationsnetz (KN6) des Fernetzbetreibers (OP6) überwacht, als auch eine Rufnummernportabilitätsfunktion (RNPORT) durchführt, die das Teilnehmeranschlußnetz (KN3) des gerufenen Teilnehmers (B) ermittelt.
